# EUROPEAN PATENT APPLICATION

(11) **EP 4 425 940 A1**
(43) Date of publication of application: **04.09.2024**
(21) Application number: 21962546.4
(22) Date of filing: 25.10.2021
(51) Int. Cl.: H04N 21/466, H04N 21/45, H04N 21/442, H04N 21/235, H04N 21/422

(54) **CONTENT PROVIDER RECOMMENDATION SERVER AND METHOD**

(71) Applicant: LG Electronics Inc., Yeongdeungpo-gu Seoul 07336 (KR)
(72) Inventor: MIN, Sunki, Seoul 06772 (KR); LEE, Jaekyung, Seoul 06772 (KR)
(74) Representative: Frenkel, Matthias Alexander
(86) International application number: PCT/KR2021/015007
(87) International publication number: WO 2023/074920

(57) **Abstract**

The present disclosure provides a content provider recommendation server comprising: a communication interface for receiving content preference information from a display device; a content information database for storing content metadata related to one or more pieces of content; and a processor for generating content provider use information about each of one or more content providers based on the content preference information, generating, based on the content provider use information, content provider recommendation information, which includes suitability for use information about each of the one or more content providers, and transmitting, through a communication interface to the display device, content provider integrated information, which includes the content provider use information and the content provider recommendation information.

## Description

### [Technical Field]

The present disclosure relates to a content provider recommendation server and a method thereof, and more specifically, to a content provider recommendation server and method recommending an optimized content provider to a user based on a user's content viewing history.

### [Background Art]

In recent years, digital TV services using wired or wireless communication network are becoming popular. Digital TV services are capable of providing various services that could not be provided by the existing analog broadcasting services.

Additionally, recently, the number of companies providing Over-the-top (OTT) services that provide content through wired or wireless communication networks has been increasing.

Meanwhile, as content providers become more diverse, the content provided by each content provider (CP) is also becoming more diverse.

The content provided by content providers is becoming more diverse, and some content providers also provide their own exclusive content. However, there are cases where content providers provide overlapping content.

Therefore, a problem arises in which users have to individually subscribe for a plurality of content providers. Additionally, in the worst case, content that the user wants to view may be provided in duplicate from all the plurality of content providers.

In this case, the user may waste money by paying fees to content providers repeatedly. Therefore, there is a need to recommend the optimal content provider to users.

### [Disclosure]

### [Technical Problem]

An object of the present disclosure is to provide a content provider recommendation server and a method thereof that can recommend a content provider optimized for a user based on the user's content viewing history and content provider use history when the user uses a content provider through a display device.

### [Technical Solution]

A content provider recommendation server according to an embodiment of the present disclosure includes a communication interface for receiving content preference information from a display device; a content information database for storing content metadata related to one or more pieces of content; and a processor for generating content provider use information about each of one or more content providers based on the content preference information, generating, based on the content provider use information, content provider recommendation information, which includes suitability for use information about each of the one or more content providers, and transmitting, through a communication interface to the display device, content provider integrated information, which includes the content provider use information and the content provider recommendation information.

### [Advantageous Effect]

According to an embodiment of the present disclosure, a content provider recommendation server may receive the user's content viewing history and content provider use history from the display device, and recommend a content provider optimized for the user based on the received content viewing history and content provider use history.

According to an embodiment of the present disclosure, a content provider recommendation server can recommend an optimized content provider and assist the user in selecting one content provider when there is overlapping content among a plurality of content providers.

According to an embodiment of the present disclosure, the cost paid to a plurality of content providers may be reduced by using a content provider recommended by a content provider recommendation server.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing a remote control device according to an embodiment of the present disclosure.
Fig. 5 is a block diagram illustrating a content provider recommendation server according to an embodiment of the present disclosure.
Fig. 6 is a view for explaining content metadata according to an embodiment of the present disclosure.
Fig. 7 is a flowchart for explaining a content provider recommendation method according to an embodiment of the present disclosure.
Fig. 8 is a view for explaining content viewing history information according to an embodiment of the present disclosure.
Fig. 9 is a view for explaining content provider recommendation information according to an embodiment of the present disclosure.

### [Best Mode]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

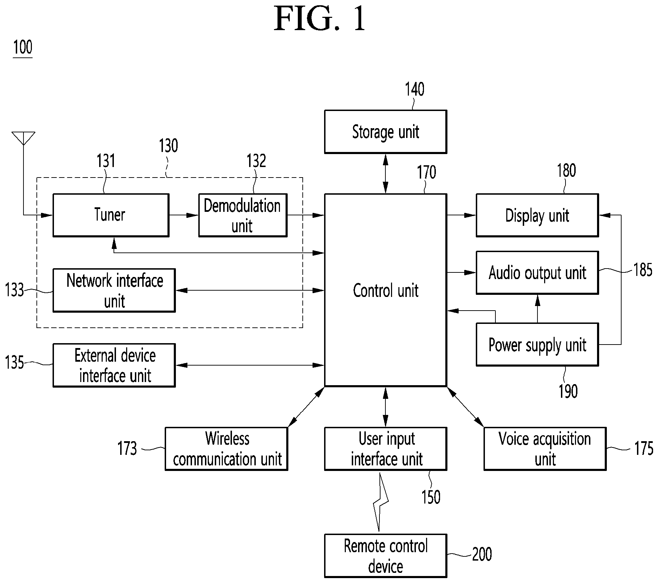

Fig. 1 is a block diagram illustrating a configuration of a display device according to an embodiment of the present disclosure.

Referring to Fig. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, or a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

Additionally, some content data stored in the display device 100 may be transmitted to a user or an electronic device, which is selected from other users or other electronic devices pre-registered in the display device 100.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, or Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100. Furthermore, if the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The voice acquisition unit 175 may acquire audio. The voice acquisition unit 175 may include at least one microphone (not shown) and may acquire audio around the display device 100 through the microphone (not shown).

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display unit 180 and the audio output unit 185.

The audio output unit 185 receives the audio-processed signal from the control unit 170 to output an audio signal.

The power supply unit 190 supplies the corresponding power to the entire display device 100. Particularly, power may be supplied to the control unit 170 that is capable of being implemented in the form of a system on chip (SOC), the display unit 180 for displaying an image, the audio output unit 185 for outputting audio, and the like.

Specifically, the power supply unit 190 may include a converter that converts AC power to DC power and a DC/DC converter that converts a level of the DC power.

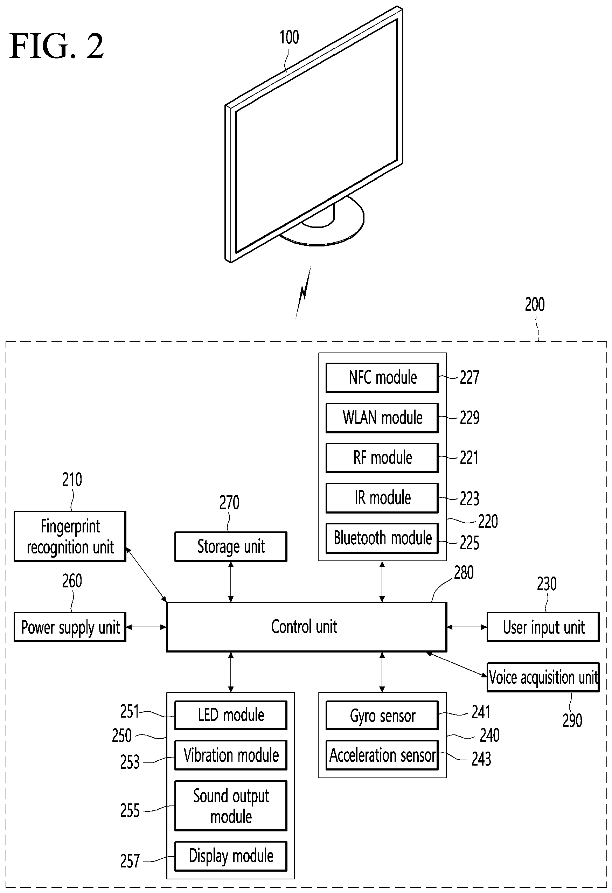

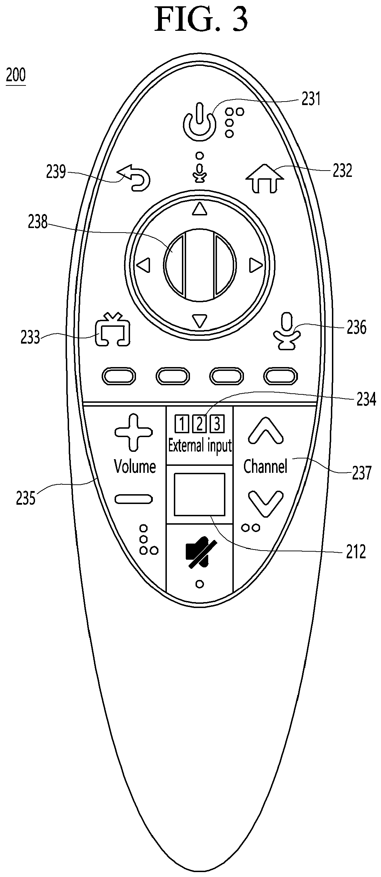

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 based on x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100. A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced. The power supply unit 260 may resume the supply of power if a predetermined key provided at the remote control device 200 is operated.

The storage unit 270 may store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

The sound acquisition unit 290 may include at least one microphone and acquire voice through the microphone.

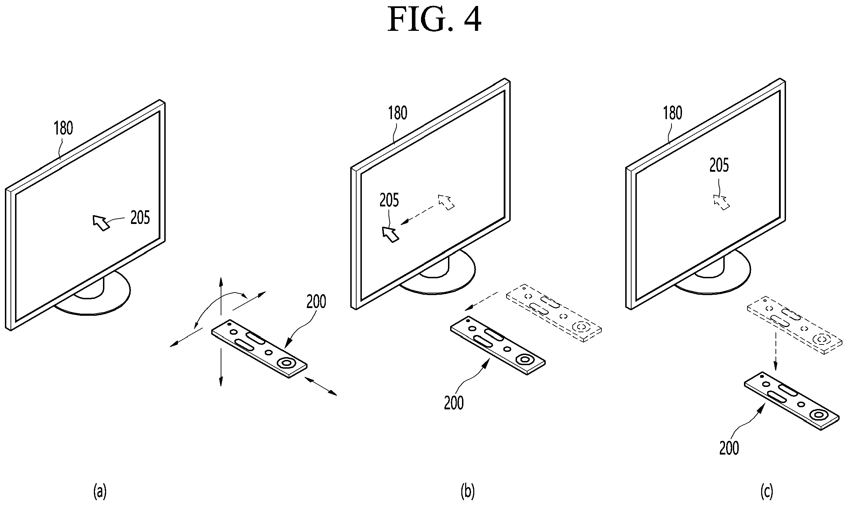

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. That is, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

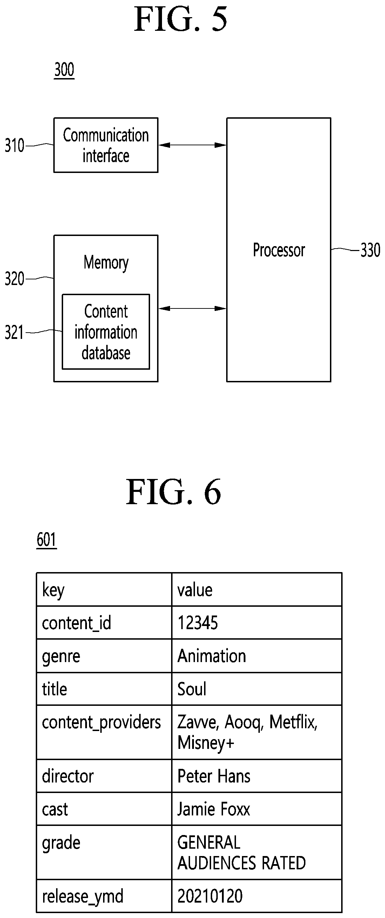

Fig. 5 is a block diagram illustrating a content provider recommendation server according to an embodiment of the present disclosure.

A content provider recommendation server 300 may include a communication interface 310 for wired or wireless communication with the display device 100.

The content provider recommendation server 300 may receive user content preference information from the display device 100 through the communication interface 310.

The user content preference information may include content viewing history information viewed on the display device 100, content provider subscription history information to which the user has subscribed, or content search history information in which the user searches for content through the display device 100.

Additionally, the content provider recommendation server 300 may include a memory 320. A content information database 321 that stores content metadata about at least one content may be stored in the memory 321.

The content information database 321 may include at least one content metadata.

Fig. 6 is a view for explaining content metadata according to an embodiment of the present disclosure.

Referring to Fig. 6, content metadata 601 may include <key, value> pairs.

For example, content metadata 601 may include content ID (content_id), content genre (genre), content title (title), content provider (content_providers), content director (content director), content actor (cast), content audience rating (grade), and content screening date (release_ymd), as key values. In addition, the content metadata 610 corresponds to each of the plurality of keys and thus may include '12345', 'Animation', 'Soul', 'Zawe, Aooq, Metflix, Misney+', 'Peter Hans', 'Jamie Foxx', 'GENERAL AUDIENCES RATED', and '20210120'.

That is, the content metadata may include information about at least one of the content ID, content genre, content title, content provider, content director, content actor, content audience rating, or content screening date.

Meanwhile, there may be a plurality of content providers for one content. For example, referring to Fig. 6, the content providers providing content ID '12345' may include the first content provider 'Zawe', the second content provider 'Aooq', the third content provider 'Metflix', and the fourth content provider ' 'Metfix'.

Additionally, the content provider recommendation server 300 may include a processor 330. The processor 330 may obtain user suitability for each of at least one content provider based on the user content preference information received from the display device 100.

User suitability may be information for recommending a content provider suitable for the user based on at least one of content history information or content search information viewed by the user.

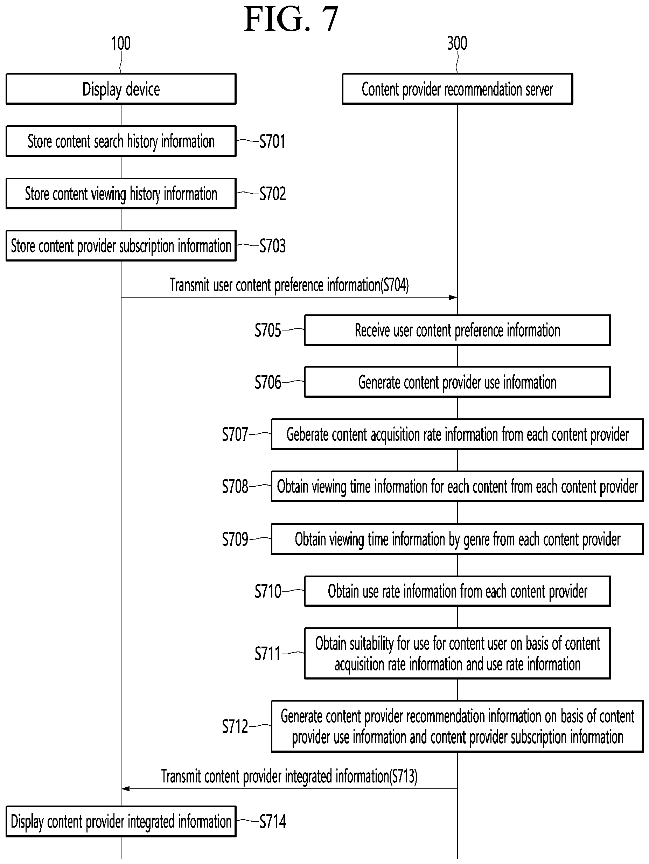

Fig. 7 is a flowchart for explaining a content provider recommendation method according to an embodiment of the present disclosure.

The display device 100 may store content search history information (S701).

For example, the processor 170 of the display device 100 may store the content search history information including a search word entered by the user to search content in the memory 140.

Additionally, the display device 100 may store content viewing history information (S702).

The content viewing history information may be information about content viewed on the display device 100.

For example, when a user views content through the display device 100, the processor 170 of the display device 100 may store the content viewing history information about the viewed content in the memory 140.

The content viewing history information may include at least one of the content ID, content viewing start time, content viewing end time, total content viewing time, and information about the content provider.

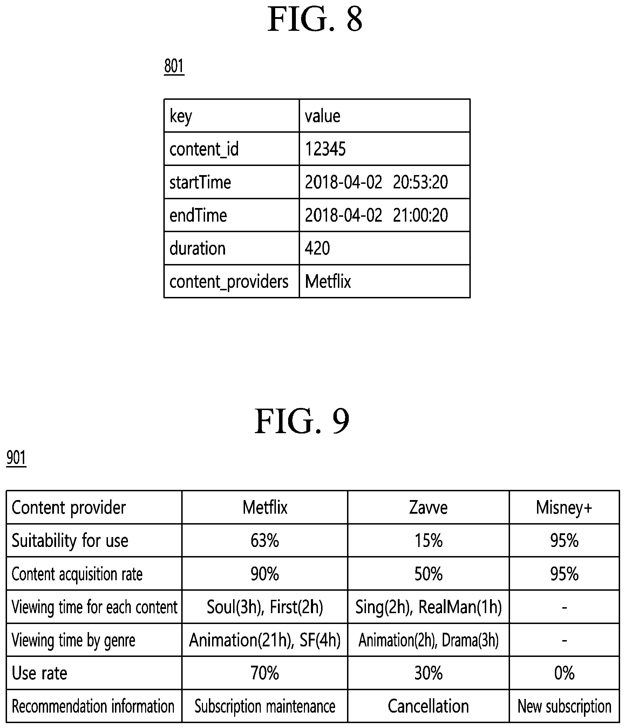

Fig. 8 is a view for explaining content viewing history information according to an embodiment of the present disclosure.

Referring to Fig. 8, content viewing history information 801 may include <key, value> pairs.

For example, the content viewing history information 801 may include content ID (content_id), content viewing start time (startTime), content viewing end time (endTIme), total content viewing time (duration), and content provider (content_provider), as a key value.

In addition, the content viewing history information 801 corresponds to each of a plurality of keys and thus may include '12345', '2018-04-02 20:53:20', '2018-04-02 21:00:20', '420', and 'Metflix' as values.

Additionally, the display device 100 may store content provider subscription information (S703).

The content provider subscription information may be information about a content provider that the user has logged in or subscribed through the display device 100.

For example, the processor 170 of the display device 100 may store information about the content provider to which the user has subscribed in the memory 140.

Meanwhile, the display device 100 may transmit the user content preference information to the content provider recommendation server 300 (S704).

The user content preference information may include at least one of the content viewing history information about content viewed on the display device 100, the content provider subscription history information about the content provider to which the user has subscribed, or the content search history information in which a user searches for content through the display device 100.

For example, the processor 170 of the display device 100 may transmit the user content preference information to the content provider recommendation server 300 through the communication unit 173.

Meanwhile, the content provider recommendation server 300 may receive the user content preference information.

The content provider recommendation server 300 may receive the user content preference information transmitted from the display device 100 through the communication interface 310 (S705).

Meanwhile, the content provider recommendation server 300 may generate content provider use information based on the content preference information (S706).

The content provider use information is information that may inform which content provider is suitable for the user for each of at least one content provider, and may refer to information about the current status of the user's use of the content provider.

The processor 330 of the content provider recommendation server 300 may generate the content provider use information based on at least one of the content search history information, the content viewing history information, or the content provider subscription information included in the user content preference information.

The content provider use information may include at least one of content acquisition rate information, viewing time information for each content, viewing time information by genre, and use rate information, for each of at least one content provider.

The processor 330 may generate the content acquisition rate information for each of at least one content provider based on at least one content viewing history information included in the user content preference information (S707).

The content acquisition rate information may be information about whether the content provider provides how much of the content the user has viewed, which is obtained based on the user's content viewing history information included in the user content preference information. For example, if a user watches content A, B, C, and D and the content provider provides only content A, the content acquisition rate information may be 25%.

For example, the processor 330 may obtain a content ID included in the content viewing history information and determine whether each content provider is providing content that matches the obtained content ID. Additionally, the processor 330 may generate the content acquisition rate information by obtaining a ratio corresponding to content of the content viewed by the user, which is provided by a content provider.

The processor 330 may generate content viewing time information for each of at least one content provider based on at least one content viewing history information included in content preference information (S708).

The viewing time information for each content may be information about how much the user has viewed the content provided by the content provider, which is obtained based on the user's content viewing history information included in the user content preference information. For example, if a user views the first content provided by a first content provider for 3 hours and the second content for 2 hours, the viewing time information for the first content provided by the first content provider may be 3 hours, and the viewing time information for the second content of the first content provider may be 2 hours.

For example, the processor 330 may generate content-specific viewing time information for each of at least one content provider based on the content ID, content provider information, or total content viewing time information included in the content viewing history information.

The processor 330 may generate viewing time information by genre for each of at least one content provider based on at least one content viewing history information included in content preference information (S709).

The viewing time information by genre may refer to viewing time information according to the genre of content the user viewed through a content provider, which is obtained based on the user's content viewing history information included in the user content preference information. For example, if a user views 10 hours of second content in the animation genre provided by a first content provider and 10 hours of third content in the animation genre, the viewing time for the animation genre of the first content provider may be 20 hours.

For example, the processor 330 may generate the viewing time information by genre for each of at least one content provider based on content genre information and content provider information included in the content viewing history information.

The processor 330 may generate use rate information for each of at least one content provider based on at least one content viewing history information included in content preference information (S710).

The use rate information may be the ratio of the time the user used each of at least one content provider. For example, if the user used the first content provider for 7 hours and the second content provider for 3 hours, the use rate information of the first content provider may be 70%, and the use rate information of the second content provider may be 30%.

For example, the processor 330 may obtain the total use time for each of at least one content provider based on content provider information and total content viewing time information included in content viewing history information. Additionally, the processor 330 may generate use ratio information for each of at least one content provider based on total use time information for each of the at least one content provider.

Meanwhile, the processor 330 may generate content provider recommendation information based on content provider use information and content provider subscription information (S712).

The content provider recommendation information may include suitability for use information for each of at least one content provider and recommendation information regarding new subscription, maintenance, or termination.

Fig. 9 is a view for explaining content provider recommendation information according to an embodiment of the present disclosure.

Referring to Fig. 9, content provider integrated information 901 may include content provider recommendation information and content provider use information for each of a plurality of content providers.

The processor 330 may generate content provider recommendation information for each content provider based on content provider use information.

The processor 330 may obtain suitability for use based on the content acquisition rate information and use rate information included in the content provider use information.

For example, the processor 330 may obtain the suitability for use for a content provider by multiplying the content acquisition rate and the use rate. Referring to Fig. 9, the usability suitability of the first content provider 'Metflix' may be '63%', which is the product of the content acquisition rate of '90%' and the use rate of '70%'.

Meanwhile, the processor 330 may determine a content provider of at least one content provider to which the user has not subscribed based on content provider subscription information. If the user is a content provider who has not subscribed, the processor 330 can obtain the content acquisition rate as the suitability for use. For example, referring to Fig. 9, when the use rate of the third content provider 'Misney+' is '0%', a content acquisition rate of '90%' can be obtained as the suitability for use.

Meanwhile, the processor 330 may generate recommendation information regarding new subscription, maintenance, or cancellation of subscription to a content provider based on suitability for use information and content provider subscription information.

Based on the content provider subscription information, the processor 330 may generate recommendation information recommending maintenance of subscription when the user subscribes to the content provider and the suitability for use is equal to or higher than a preset standard value.

The processor 330 may determine a content provider of at least one content provider to which the user has subscribed based on the content provider subscription information. The processor 330 may generate recommendation information recommending maintenance of subscription if the suitability for use of the content provider to which the user has subscribed is equal to or higher than a preset standard value.

For example, referring to Fig. 9, if the user subscribes to the first content provider 'Metflix' and the suitability for use is equal to or higher than the preset standard value of '60%', the processor 330 may generate recommended information by maintaining the subscription.

Additionally, based on the content provider subscription information, the processor 330 may generate recommendation information recommending cancellation when the user subscribes to the content provider and the suitability for use is equal to or less than a preset standard value.

For example, referring to Fig. 9, if the user subscribes to the second content provider 'Zawe' and the suitability for use is less than the preset standard value of '60%', recommendation information can be generated for cancellation.

In addition, based on the content provider subscription information, the processor 330 may generate recommendation information that recommends new subscription when the user has not subscribed with the content provider and when the suitability for use is higher than that of other content providers.

For example, referring to Fig. 9, when the user does not subscribe to the third content provider 'Disney', and the suitability for use is 95% higher than '63%' for the first content provider and '15%' for the second content provider, recommended information can be created with a new subscription.

The processor 330 of the content provider recommendation server 300 may transmit content provider integrated information including content provider use information and content provider recommendation information to the display device 100 through the communication interface 310 (S713).

The display device 100 may display the received content provider integrated information through the display unit 180 (S714).

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but rather to explain it, and the scope of the technical idea of the present disclosure is not limited by these embodiments.

The scope of protection of the present disclosure should be interpreted in accordance with the claims below, and all technical ideas within the equivalent scope should be construed as being included in the scope of rights of the present disclosure.

## Claims

1. A content provider recommendation server comprising:
a communication interface for receiving content preference information from a display device;
a content information database for storing content metadata related to at least one piece of content; and
a processor configured to:
generate content provider use information about each of at least one content provider based on the content preference information,
generate content provider recommendation information including suitability for use information about each of at least one content provider based on the content provider use information, and
transmit, content provider integrated information including the content provider use information and the content provider recommendation information to the display device through the communication interface.

2. The content provider recommendation server of claim 1,
wherein the user content preference information includes:
content viewing history information and content provider subscription information.

3. The content provider recommendation server of claim 2,
wherein the content metadata includes:
information about at least one of a content ID, a content genre, and a content provider.

4. The content provider recommendation server of claim 3,
wherein the processor is configured to generate the content provider use information based on the content viewing history information and the content provider subscription information.

5. The content provider recommendation server of claim 4,
wherein the processor is configured to generate content security rate information for each at least one content provider based on the content viewing history information.

6. The content provider recommendation server of claim 4,
wherein the processor is configured to generate content viewing time information for each at least one content provider based on the content viewing history information.

7. The content provider recommendation server of claim 4,
wherein the processor is configured to generate viewing time information by genre for each at least one content provider based on the content viewing history information.

8. The content provider recommendation server of claim 4,
wherein the processor is configured to generate use rate information for each of at least one content provider based on the content viewing history information.

9. The content provider recommendation server of claim 4,
wherein the processor is configured to generate content provider recommendation information based on the content provider use information and the content provider subscription information, and
wherein the content provider recommendation information includes suitability for use information and recommendation information for each of the at least one content provider.

10. The content provider recommendation server of claim 9,
wherein the processor is configured to generate the suitability for use based on content acquisition rate information and use rate information included in the content provider use information.

11. The content provider recommendation server of claim 10,
wherein the processor is configured to:
based on the content provider subscription information, determine a content provider of the at least one content provider to which the user has not subscribed, and
obtain the content acquisition rate of the content provider to which the user has not subscribed as the suitability for use.

12. The content provider recommendation server of claim 10,
wherein the processor is configured to:
determine the content provider of the at least one content provider to which the user has subscribed based on the content provider subscription information, and
generate recommendation information recommending maintenance of subscription if the suitability for use of the content provider to which the user has subscribed is higher than or equal to a preset standard value.

13. The content provider recommendation server of claim 10,
wherein the processor is configured to:
determine the content provider of the at least one content provider to which the user has subscribed based on the content provider subscription information, and
generate recommendation information to recommend cancellation of subscription if the suitability for use of the content provider to which the user has subscribed is less than a preset standard value.

14. The content provider recommendation server of claim 10,
wherein the processor is configured to:
determine a content provider among the at least one content provider to which the user has not subscribed based on the content provider subscription information, and
generate recommended information recommending a new subscription if the suitability for use of the content provider to which the user has not subscribed is higher than the suitability for use of other content providers.

15. The content provider recommendation server of claim 9,
wherein the processor is configured to:
transmit content provider integrated information including the content provider use information and the content provider recommendation information to the display device through the communication interface.
